# EUROPEAN PATENT APPLICATION

(11) **EP 3 023 992 A1**
(43) Date of publication of application: **25.05.2016**
(21) Application number: 14003917.3
(22) Date of filing: 21.11.2014
(51) Int. Cl.: G21C 9/06, G21C 13/02, G21C 19/317

(54) **Filtered containment vent system for a nuclear power plant**

(71) Applicant: Westinghouse Electric Germany GmbH, 68167 Mannheim (DE)
(72) Inventor: Bauer, Martin, 68165 Mannheim (DE); Frings, Malte, 68229 Mannheim (DE); Rensonnet, Thibaut, 4000 Liège (BE); Hahn, Hans-Ulrich, 76829 Landau (DE)
(74) Representative: Fritsch, Klaus

(57) **Abstract**

The invention is related to a filtered containment vent system for a nuclear power plant, comprising a flow conduit (12, 50, 72) for a gas stream (30, 82) to be filtered, with an upstream inlet (14) inside the containment (18) and a downstream outlet (16) at the edge of the containment (18), leading afterwards to outside the containment and comprising an aerosol filter (22, 40) arranged inbetween upstream inlet (14) and downstream outlet (16), wherein the aerosol filter (22, 40) comprises a demister unit (42) and at least two subsequent filter units (44, 46, 48). At least one PAR (Passive Autocatalytic Recombiner) cartridge (76, 78, 80, 92, 94, 96, 100) is foreseen in the flow conduit (12, 50, 72) inbetween its inlet (14) and its outlet (16) in order to recombine the hydrogen and carbon monoxide within the gas stream (30, 82) to be filtered.

## Description

The invention is related to a filtered containment vent system for a nuclear power plant, comprising a flow conduit for a gas stream to be filtered, with an upstream inlet inside the containment and a downstream outlet at the edge of the containment, leading afterwards to outside the containment and comprising an aerosol filter arranged inbetween upstream inlet and downstream outlet, wherein the aerosol filter comprises a demister unit and at least two subsequent filter units.

It is known that in nuclear power plants a large number of safety features are foreseen in order to reduce any risk for the environment and the public in case of an accident to an absolute minimum. One critical situation to deal with is a slow over-pressurization within the containment around the nuclear reactor during a severe accident.

A Filtered Containment Vent System (FCVS) can be implemented in nuclear power plants in order to deal with such an overpressure situation. There are several technologies for such filtered containment vent systems (FCVS). One of them is the Dry Filter Method (DFM) that is based on the use of aerosol and iodine filters which are placed within a flow conduit leading from inside the containment to outside. An aerosol filter can be located inside or outside the containment.

During normal operation of the nuclear power plant the flow conduit is closed by isolation valves at the edge of the containment. Only in case of an overpressure situation within the containment those valves are opened so that a gas stream flows out of the containment and the inner pressure is reduced therewith. In order to reduce the amount of radioactive particles the vented gas stream is filtered by the aerosol and iodine filters. A respective filtered vent system is described for example in the patent document WO2013135374 (A1).

During a severe accident the vented gas stream may contain flammable gases, in particular hydrogen, but is generally inerted due to the steam content of the containment atmosphere at the time of venting.

Condensation in the filtered containment vent system (FCVS), mainly at the beginning of a venting cycle, can result in the formation of a flammable mixture in the venting gases (as steam condenses the hydrogen concentration will increase and may go above the flammability limit of hydrogen). The formation of a flammable mixture in the filtered containment vent system (FCVS) has to be avoided to ensure the full integrity of the system.

Various methods are known to prevent the formation of a flammable mixture inside a filtered containment vent system (FCVS). One of them is avoiding the formation of a flammable mixture inside the containment by
- installing Passive Autocatalytic Recombiners (PAR) within the containment as described for example in the patent document DE 20 2009 009405 (U1),
- installing igniters and/or
- implementing other severe accident mitigation measures.

Another method is based on active auxiliary systems such as a heating system for preventing condensation in the filtered containment vent system (FCVS) and/or a nitrogen injection system for counter-acting the effect of condensation (injecting nitrogen into the system to compensate for the condensed steam, thereby keeping the hydrogen concentration below the flammability limit).

Disadvantageously within the state of the art is that these systems require active components such as heating systems to avoid condensation and/or they require a non-negligible space footprint.

Based on this state of the art it is objective of the invention to provide means for passively preventing the formation of a flammable mixture in the FCVS without relying on any auxiliary systems, wherein the required space footprint has to be as small as possible.

The problem of the invention is solved by a filtered containment vent system of the aforementioned kind. This is characterized in that at least one PAR (Passive Autocatalytic Recombiner) cartridge is foreseen in the flow conduit inbetween its inlet and its outlet in order to recombine the hydrogen and carbon monoxide within the gas stream to be filtered.

A passive autocatalytic recombiner (PAR) is based on the function principle, that a gas mixture with flammable gas such as hydrogen (H₂) or carbon monoxide (CO) and oxygen (O₂) is fed into the lower end of a tube-like casing with PAR cartridges mounted therein. PAR cartridges comprise catalytic material enabling an exothermic oxidation of H₂/CO with O₂ without flame at lower temperatures. The heat energy developing during this process heats the upwards flowing gas stream which leaves the tube-like casing at its top. The tube-like shape of the casing is important for generating a stack-effect which provides sufficient air circulation around the PAR cartridges.

Basic idea of the invention consists in integrating additional PAR cartridges directly in the flow conduit of the venting system. Thus separate tube-like casings for those PAR cartridges are not required and the required space within the containment is reduced in an advantageous way therewith. According to the invention PAR cartridges are placed directly in the venting flow inside or outside the aerosol filters in order to recombine the hydrogen and carbon monoxide entering the filtered containment vent system (FCVS).

Advantage of the invention is that the system is fully passive and no active component is required. Thus the reliability is increased herewith. Additionally PAR cartridg-es are easily implementable in already existing filtered containment vent systems (FCVS) without major effort. In particular the weight increase of the aerosol filter is negligible and the increase in footprint is also very small (around 100 mm in length).

According to a further embodiment of the invention containment isolation valves are foreseen at the downstream outlet of the flow conduit for the gas stream to be filtered. The downstream outlet is located at the edge of the containment. So it is ensured that during normal operation of the nuclear power plant no gas stream flows out of the containment.

According to a further embodiment of the invention at least one PAR cartridge is located within the aerosol filter. Aerosol filters comprise typically several subsequent filter units with an increased cross section compared to the remaining flow conduit. An aerosol filter might have a dimension section of 1,5m x 1,5m x 1,5m wherein the size of a PAR cartridge is for example 4cm x 2cm x 1cm.

According to another embodiment of the invention at least one PAR cartridge is located within the demister unit of the aerosol filter. This is the upstream input of the aerosol filter and accessible in an easy way. Thus a retroactive mounting of PAR cartridges in an existing aerosol filter is particular simplified therewith.

According to another embodiment of the invention the at least one PAR cartridge is located within the last filter unit of the aerosol filter, preferably on its downstream side. This is the downstream output of the aerosol filter and also accessible in an easy way therewith. Thus also in this case a retroactive mounting of PAR cartridges in an existing aerosol filter is particular simplified.

According to another embodiment of the filtered containment vent system according to the invention several PAR cartridges are arranged in a row or matrix. According to a further special embodiment of the invention several PAR cartridges are covering the cross section of at least one unit of the aerosol filter. Thus the whole cross section of a filter unit of an aerosol filter can be equipped in a homogenous way therewith, so that the gas stream through each PAR cartridge is approximately equal. According to another embodiment of the invention at least one PAR cartridge is located in a separate housing downstream of the aerosol filter. Dependent on the local constructional frame conditions within the nuclear power plant this might also an advantageous solution. Preferably the PAR cartridge has to be foreseen upstream the isolation valves of the containment.

According to a further embodiment of the invention PAR cartridges are arranged perpendicular to the flow direction of the gas stream to be filtered so that the catalytic active surfaces are passed through directly. This means that the side of the PAR cartridge with the biggest surface is placed perpendicular to the flow direction of the gas stream so that the catalytic effect is maximal therewith.

According to another embodiment of the invention PAR cartridges are arranged parallel to the flow direction of the gas stream to be filtered so that no significant blockage of the flow cross section will be affected therewith. This means that a side of the PAR cartridge with not the biggest surface is placed perpendicular to the flow direction.

According to another embodiment of the invention the number of PAR cartridges is determined in that way, that - considering the worst case scenario - the hydrogen concentration downstream the cartridges will be kept below the flammability limit. So the risk of a burn or explosion of hydrogen is excluded.

Further advantageous embodiments of the invention are mentioned in the dependent claims.

The invention will now be further explained by means of an exemplary embodiment and with reference to the accompanying drawings, in which:
- Figure 1: shows a filtered containment vent system in a nuclear power plant,
- Figure 2: shows an exemplary aerosol filter,
- Figure 3: shows an exemplary flow conduit with perpendicular PAR cartridges,
- Figure 4: shows an exemplary flow conduit with parallel PAR cartridges and
- Figure 5: shows an exemplary PAR cartridge.

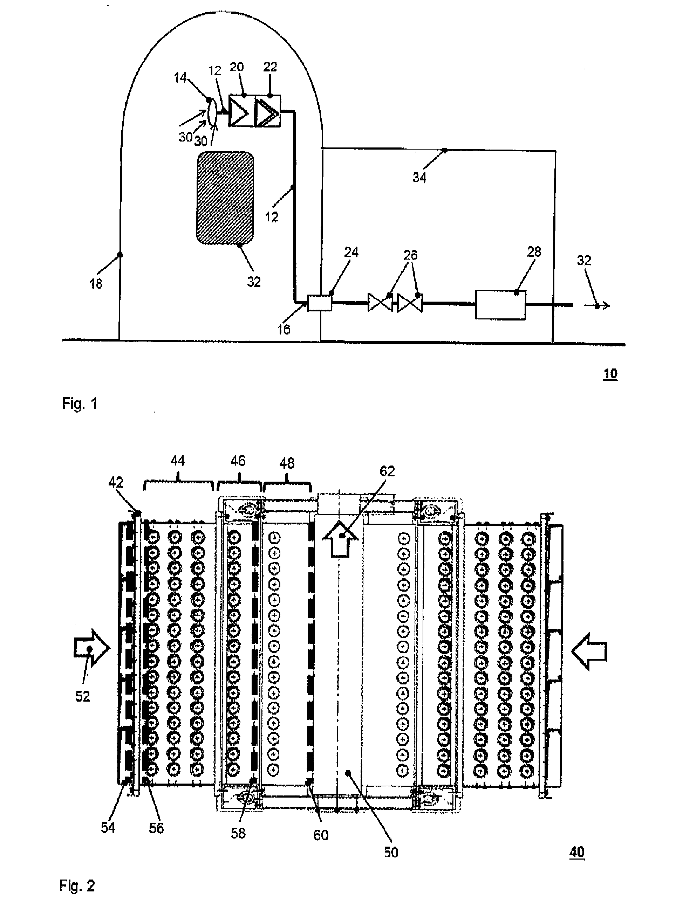

Fig. 1 shows filtered containment vent system in nuclear power plant in a sketch 10. A nuclear reactor 32 is foreseen in the center of containment 18. Furthermore the following components of a filtered containment vessel system are arranged within the containment 18: a flow conduit 12 for a gas stream leading from an upstream inlet 14 to a downstream outlet 16 at the edge of the containment 18. Inbetween a pre-filter 20 and an aerosol filter 22 are foreseen, where the flow conduit passes through. Within the aerosol filter 22 a number of PAR cartridges is arranged, which are not visible in this sketch. Thus hydrogen and carbon monoxide within the gas stream are recombined when passing through the aerosol filter.

The flow conduit 12 ends at a penetration 26 which guides through the wall of the containment 18 to a building 34. Here the flow conduit is continued, wherein isolation valves 26 and an iodine filter 28 are foreseen before the gas stream 30, which entered the flow conduit 12 at its downstream inlet 14, is exhausted as filtered gas stream 32 into the environment.

Fig. 2 shows an exemplary aerosol filter 40. On two opposed sides of an output flow conduit 50 of the aerosol filter three filter units 44, 46, 48 and a demister unit 42 are arranged in a sequence. An incoming gas stream 52 enters the aerosol filter through the demister unit 42 and passes the filter units 44, 46, 48 before it enters the output flow conduit 50 and leaves the aerosol filter as filtered gas stream 62. The demister unit 42 as outer component is accessible in a good way and therefore a suitable unit for retroactive mounting PAR cartridges in an existing aerosol filter. So the locations 54 and 56 upstream respectively downstream the demister unit 42 are suitable for arranging PAR cartridges. Due to the same reason the locations 58 and 60 upstream and downstream the last filter unit 48 are suitable as well since the filter unit 48 is accessible in a good way too.

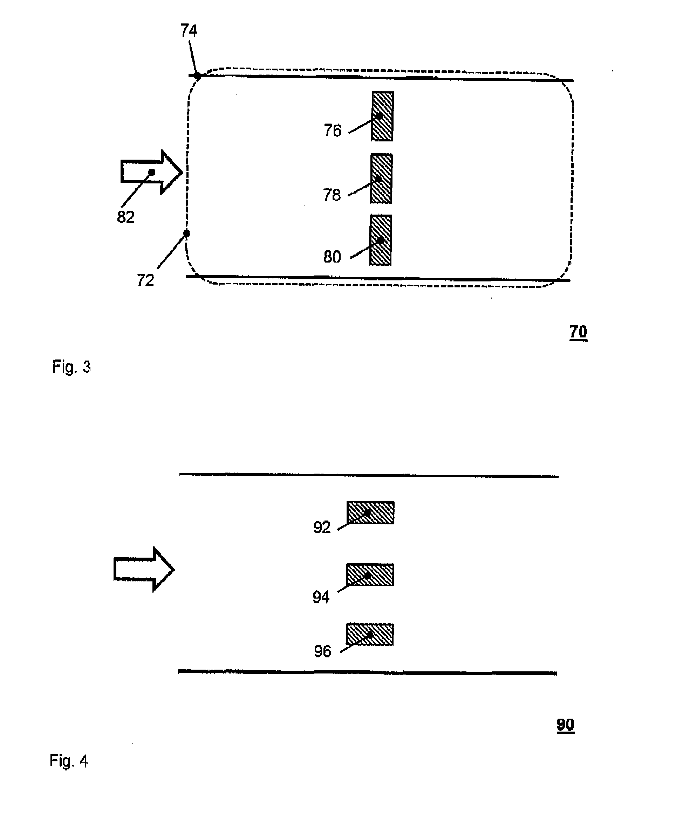

Fig. 3 shows an exemplary flow conduit with perpendicular PAR cartridges in a sketch 70. Within a tubular section 72 of a flow conduit, which is built by a circular wall 74, several PAR cartridges 76, 78, 80 are arranged in perpendicular orientation to the flow direction of an incoming gas stream 82. So the catalytic active surfaces of the PAR cartridges 76, 78, 80 are passed through directly.

Fig. 4 shows an exemplary flow conduit with PAR cartridges 92, 94, 96, which are oriented parallel to the flow direction of the gas stream, in a sketch 90.

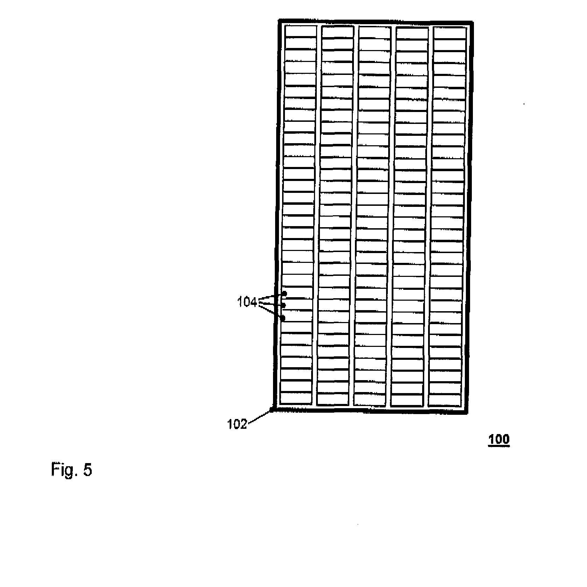

Fig. 5 shows an exemplary PAR cartridge in a cross sectional view 100. Within a permeable hollow cartridge 102 holder several columns of palladium coated pellets 104 are arranged.

### List of reference signs

- 10: filtered containment vent system in nuclear power plant
- 12: flow conduit for gas stream
- 14: upstream inlet
- 16: downstream outlet
- 18: containment
- 20: pre-filter
- 22: aerosol filter
- 24: penetration
- 26: isolation valves
- 28: iodine filter
- 30: gas stream in
- 32: gas stream out
- 34: building
- 40: exemplary aerosol filter
- 42: demister unit
- 44: first filter unit of the aerosol filter
- 46: second filter unit of the aerosol filter
- 48: last filter unit of the aerosol filter
- 50: output flow conduit of aerosol filter
- 52: incoming gas stream to be filtered
- 54: first location for PAR cartridges before demister unit
- 56: second location for PAR cartridges behind demister unit
- 58: third location for PAR cartridges before last filter unit
- 60: fourth location for PAR cartridges behind last filter unit
- 62: outcoming filtered gas stream
- 70: exemplary flow conduit with perpendicular PAR cartridges
- 72: section of flow conduit
- 74: wall of flow conduit
- 76: first perpendicular PAR cartridge
- 78: second perpendicular PAR cartridge
- 80: third perpendicular PAR cartridge
- 82: incoming gas stream
- 90: exemplary flow conduit with parallel PAR cartridges
- 92: first parallel PAR cartridge
- 94: second parallel PAR cartridge
- 96: third parallel PAR cartridge
- 100: exemplary PAR cartridge
- 102: cartridge holder
- 104: palladium coated pellets

## Claims

1. Filtered containment vent system for a nuclear power plant, comprising
• a flow conduit (12, 50, 72) for a gas stream (30, 82) to be filtered, with an upstream inlet (14) inside the containment (18) and a downstream outlet (16) at the edge of the containment (18), leading afterwards to outside the containment,
• an aerosol filter (22, 40) arranged in between upstream inlet (14) and down-stream outlet (16),
• wherein the aerosol filter (22, 40) comprises a demister unit (42) and at least two subsequent filter units (44, 46, 48),
**characterized in that**
at least one PAR (Passive Autocatalytic Recombiner) cartridge (76, 78, 80, 92, 94, 96, 100) is foreseen in the flow conduit (12, 50, 72) inbetween its inlet (14) and its outlet (16) in order to recombine the hydrogen and carbon monoxide within the gas stream (30, 82) to be filtered.

2. Filtered containment vent system according claim 1, **characterized in that** containment isolation valves (26) are foreseen at the downstream outlet (16) of the flow conduit (12, 50, 72) for the gas stream (30, 82) to be filtered.

3. Filtered containment vent system according to claim 1 or 2, **characterized in that** the at least one PAR cartridge (76, 78, 80, 92, 94, 96, 100) is located within the aerosol filter (22, 40).

4. Filtered containment vent system according to claim 3, **characterized in that** the at least one PAR cartridge (76, 78, 80, 92, 94, 96, 100) is located within the demister unit (42) of the aerosol filter (22, 40).

5. Filtered containment vent system according to claim 3 or 4, **characterized in that** the at least one PAR cartridge (76, 78, 80, 92, 94, 96, 100) is located within the last filter unit (48) of the aerosol filter (22, 40), preferably on its downstream side.

6. Filtered containment vent system according to claim 3 to 5, **characterized in that** several PAR cartridges (76, 78, 80, 92, 94, 96, 100) are arranged in a row or matrix.

7. Filtered containment vent system according to claim 6, **characterized in that** several PAR cartridges (76, 78, 80, 92, 94, 96, 100) are covering the cross section of at least one unit (42, 44, 46, 48) of the aerosol filter (22, 40).

8. Filtered containment vent system according to any of the previous claims, **characterized in that** at least one PAR cartridge (76, 78, 80, 92, 94, 96, 100) is located in a separate housing downstream of the aerosol filter (22, 40).

9. Filtered containment vent system according to any of the previous claims, **characterized in that** PAR cartridges (76, 78, 80, 92, 94, 96, 100) are arranged perpendicular to the flow direction of the gas stream (30, 82) to be filtered so that the catalytic active surfaces are passed through directly.

10. Filtered containment vent system according to any of the previous claims, **characterized in that** PAR cartridges (76, 78, 80, 92, 94, 96, 100) are arranged parallel to the flow direction of the gas stream (30, 82) to be filtered so that no significant blockage of the flow cross section will be affected therewith.

11. Filtered containment vent system according to any of the previous claims, **characterized in that** the number of PAR cartridges (76, 78, 80, 92, 94, 96, 100) is determined **in that** way, that - considering the worst case scenario - the hydrogen concentration downstream the cartridges will be kept below its flammability limit.
